# EUROPEAN PATENT APPLICATION

(11) **EP 2 987 665 A1**
(43) Date of publication of application: **24.02.2016**
(21) Application number: 15180788.0
(22) Date of filing: 12.08.2015
(51) Int. Cl.: B60G 7/00, B21D 53/88

(54) **METHOD FOR STAMPING AN ARM FOR VEHICLE SUSPENSIONS AND SUCH AN ARM**

(30) Priority: 12.08.2014 IT BO20140462
(71) Applicant: Tiberina Solutions S.R.L., 06019 Umbertide (IT)
(72) Inventor: CIOCCI, Daniele, 62014 CORRIDONIA (IT)
(74) Representative: Manconi, Stefano

(57) **Abstract**

Method for stamping an arm for vehicle suspensions, according to which the arm is obtained starting from a flat sheet metal blank (3) which is deep-drawn at a central portion (6) and a peripheral edge (7) thereof, cut at an annular rim (9, 10, 11, 13, 14, 15) of the peripheral edge (7), and bent at the peripheral edge (7) to an angle of substantially 90° compared to a reference plane (P1) substantially parallel to the larger faces (3a, 3b) of said blank (3).

## Description

The present invention relates to a method for stamping an arm for vehicle suspensions.

In the automotive industry, it is known to provide an arm for vehicle suspensions using a method comprising the steps of:
separating two shaped blanks from substantially flat sheet metal;
bending each blank so as to define a relative concave central portion bounded by a relative peripheral edge;
bending a first portion of the peripheral edge of each blank around a first containment matrix;
drilling a second and a third portion of the peripheral edge of each blank to make a first and, respectively, a second coupling hole;
bending a fourth portion of the peripheral edge of each blank around a second containment matrix and in a reference plane placed substantially at an angle of 90° with reference to a containment plane of said blank; and
welding the two blanks along the fourth portion to make the arm and to allow the relative first portions to define a coupling seat with a first bush, the relative first holes to define a coupling seat with a second bush, and the relative third holes to define a coupling seat with a joint.

The known method of the type described above has some disadvantages primarily deriving from the fact that the arm is defined by two blanks, is therefore relatively heavy and expensive, involves the use of the aforesaid containment matrices, and also entails the complex and costly welding of the two blanks.

The object of the present invention is to provide a method for stamping an arm for vehicle suspensions which is free of the drawbacks described above and which is simple and inexpensive to implement.

According to the present invention a method is provided for stamping an arm for vehicle suspensions as claimed in the appended claims.

The present invention will now be described with reference to the accompanying drawings, which illustrate a non-limiting embodiment thereof, in which:
figure 1 is a first perspective view of a preferred embodiment of the arm for vehicle suspensions of the present invention;
figure 2 is a second perspective view of the arm in figure 1;
figure 3 schematically illustrates a succession of operating steps for making the arm in figures 1 and 2;
figure 4 is a cross-section along the line IV-IV in figure 3c;
figure 5 is a cross-section along the line V-V in figure 3c;
figure 6 is a cross-section along the line VI-VI in figure 3f;
figure 7 is a cross-section along the line VII-VII in figure 3f;
figure 8 is a cross-section along the line VIII-VIII in figure 3g;
figure 9 is a cross-section along the line IX-IX in figure 3g; and
figure 10 is a cross-section along the line X-X in figure 3h.

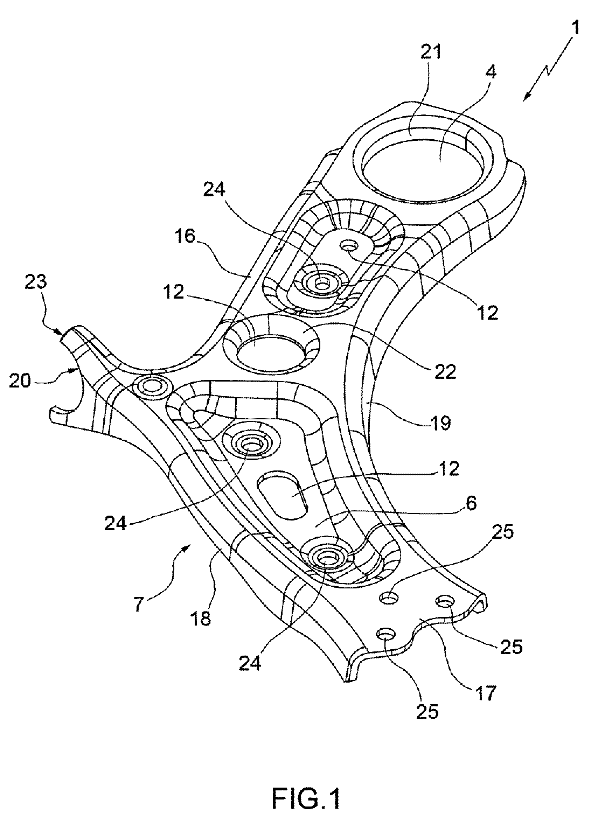

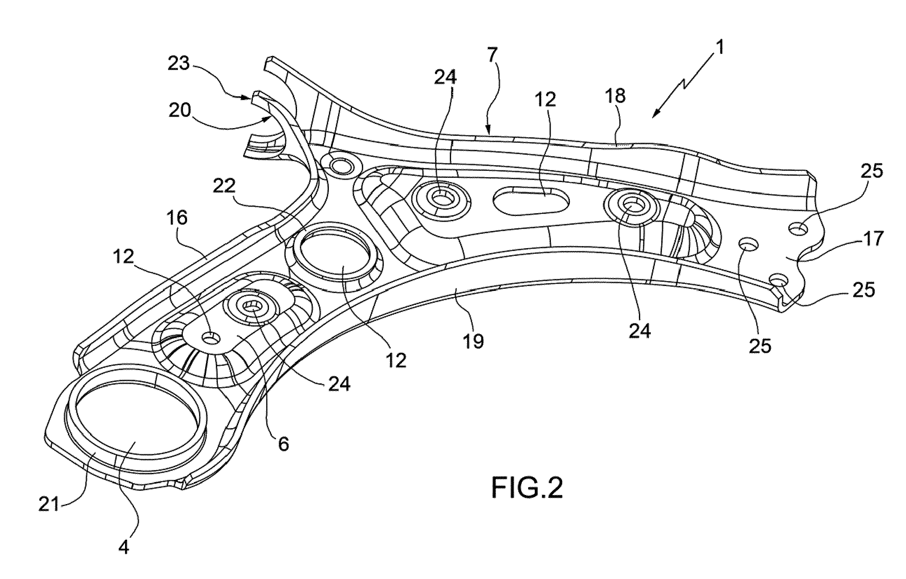

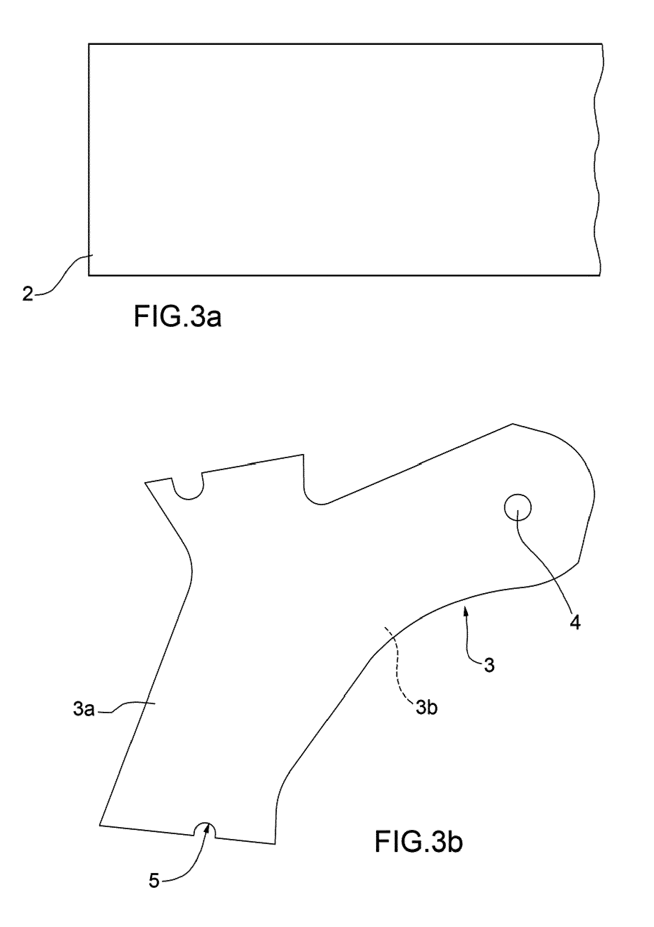

With reference to figures 1 and 2, reference numeral 1 globally denotes, an arm for vehicle suspensions which is made in one piece, has an arched shape, and is formed in a press (not shown) from a flat metal sheet (figure 3a), which has a substantially rectangular shape and is made in the present case, from Multiphase UHSS hot rolled steel of a thickness of 4 mm produced and marketed by the company ArcelorMittal under the code name M800HY.

As shown in Figure 3b, two blanks 3 (only one of which is shown in Figure 3b) are separated from the sheet metal 2 in two subsequent shearing operations.

Each blank 3 is stamped to define a relative arm 1 and is limited, in an initial configuration thereof, by two larger flat faces 3a, 3b, parallel and opposite one another.

Each blank 3 has a circular hole 4 made at a midpoint of the blank 3 and a semicircular hole 5 made on a perimetral edge of said blank 3.

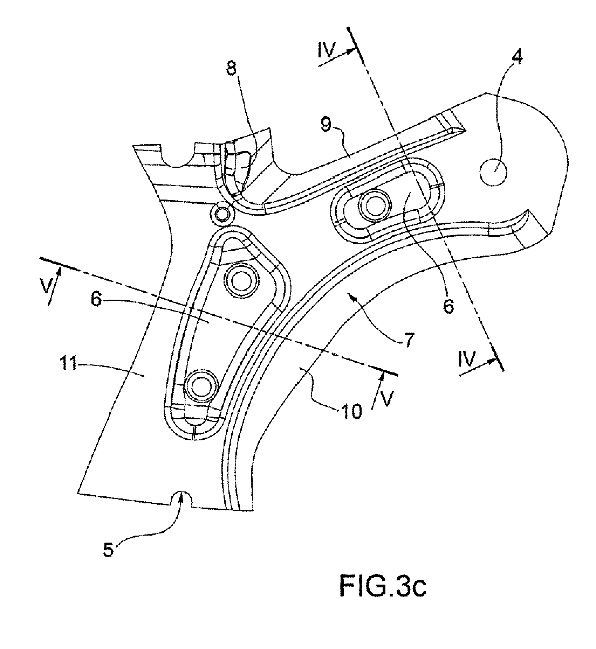

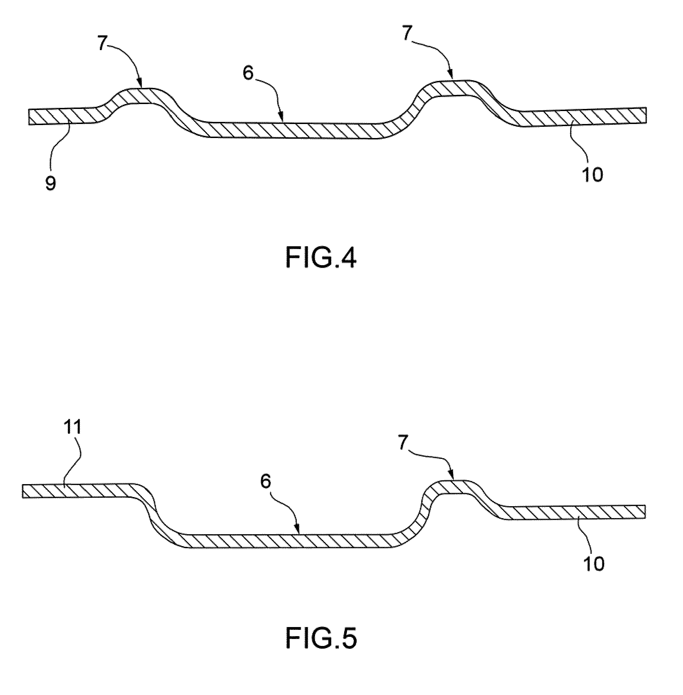

In a third operating step, each blank 3 is deep drawn at a central portion 6 thereof limited externally by an annular peripheral edge 7 and at three intermediate portions 8, 9 and 10 of the edge 7 (figures 3c, 4, and 5).

The deep-drawing is done using the holes 4, 5 as centring holes to allow precise positioning of the blank 3 inside the deep drawing mould.

At the end of the deep-drawing step, the edge 7 presents, in addition, a further intermediate portion 11 substantially flat and not subject to deep-drawing.

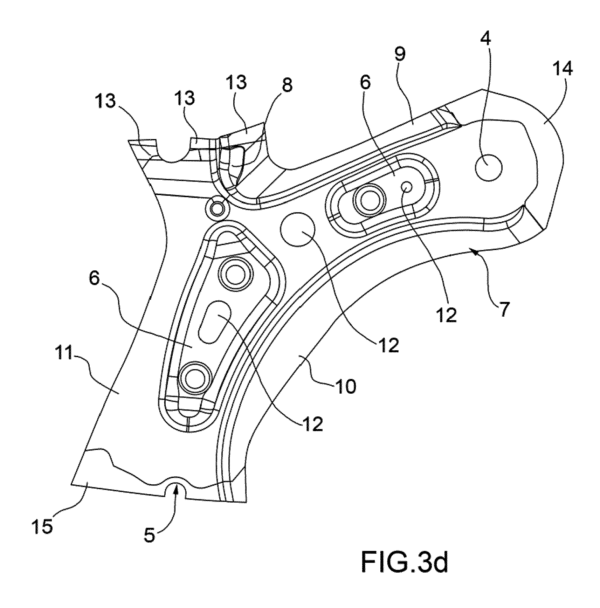

As shown in Figure 3d, in a fourth operating step, the blank 3 is subjected to a first shearing operation to make a plurality of functional holes 12 (in this case three holes 12) through the portion 6 and to eliminate three end portions 13 14, 15 of the edge 7.

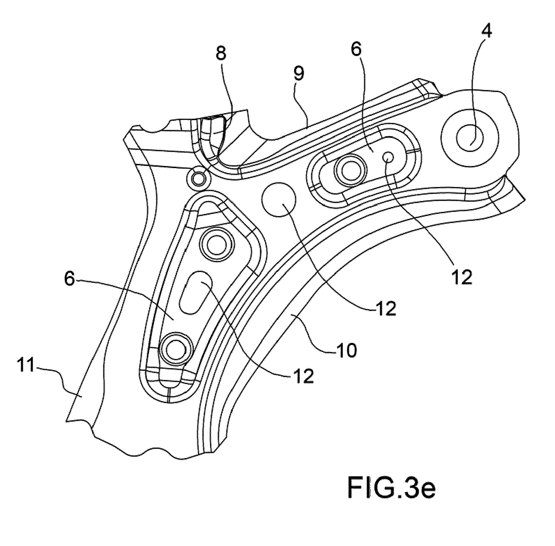

In a fifth operating step (figure 3e), the blank 3 is subjected to a second shearing operation to eliminate at least part of the portions 9, 10 and 11 of the edge 7 and to widen the hole 4.

Since the central portion 6 has a relatively high drawing depth and the edge 7 is also deep-drawn at the portions 8, 9 and 10, the shearing operations are performed subsequent to the deep-drawing operation to ensure relatively small dimensional tolerances of the edge 7.

Similarly, the hole 4, subjected to deformation during the deep drawing operation is enlarged after the deep drawing operation to ensure the correct conformation and relatively small dimensional tolerances of said hole 4.

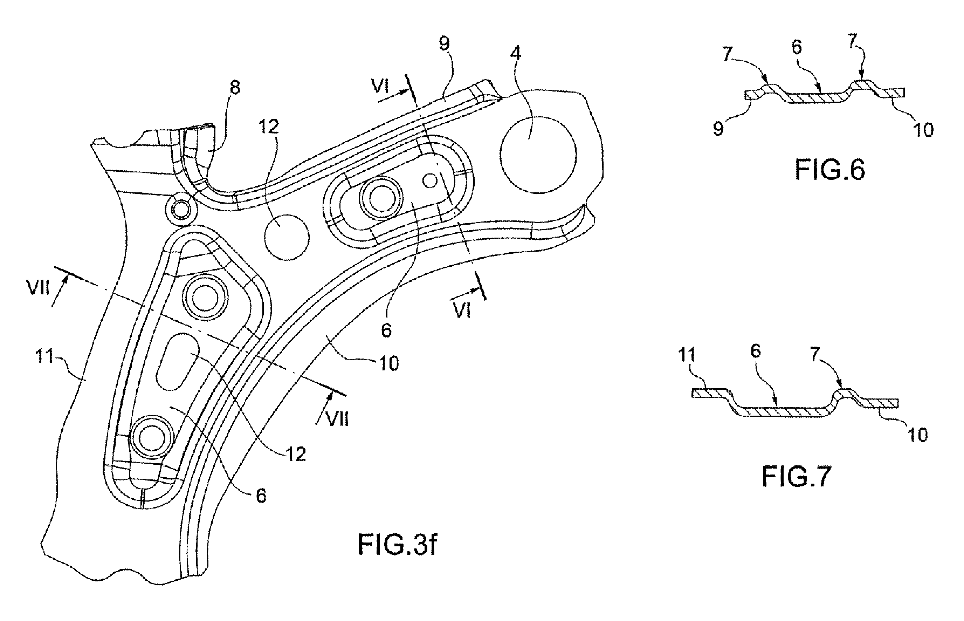

At the end of the deep drawing and shearing operations described above, the edge 7 comprises a portion 16 extending between the portion 8 and the hole 4, a portion 17 at the end opposite the portion 8, a portion 18 extending between the portions 16 and 17 and a portion 19 extending between the portion 17 and the hole 4 on the opposite side of the portions 16 and 18 to the portion 6 (figures 3f, 6 and 7).

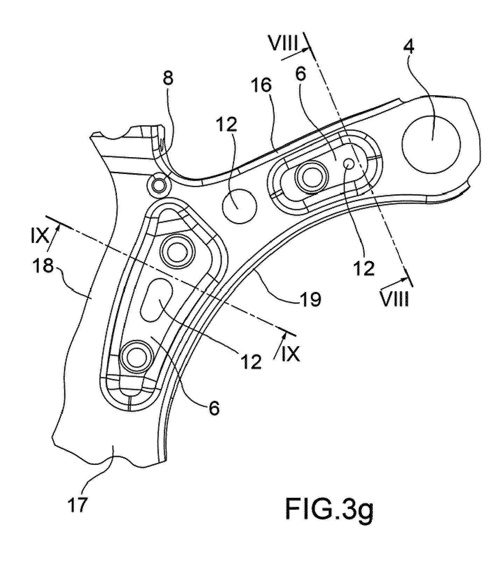

In a sixth operating step, the portions 16 and 19 of the edge 7 are bent at an angle of substantially 90° with respect to a reference plane P1 (figures 3g, 8 and 9) parallel to the surfaces 3a, 3b.

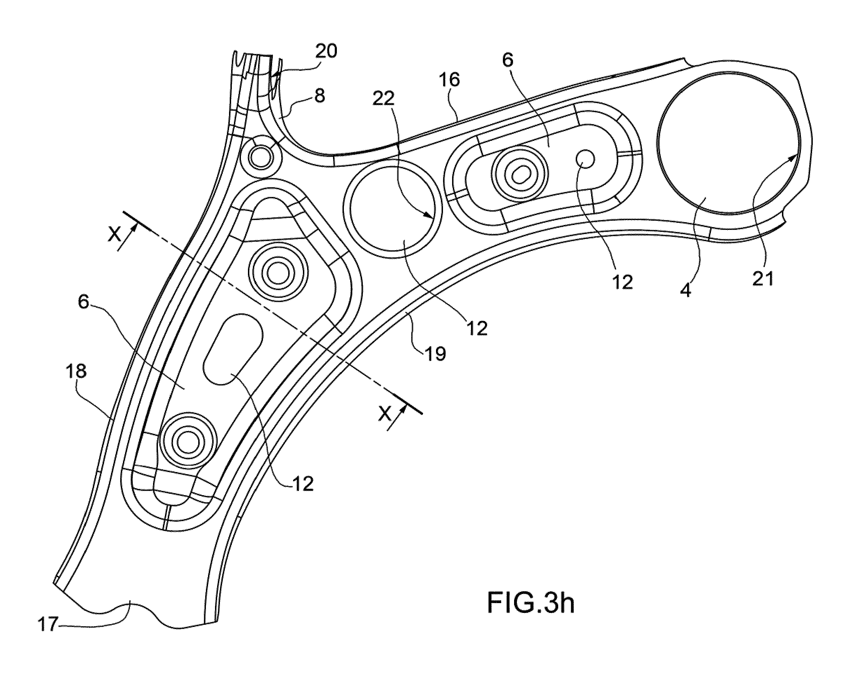

In a seventh operating step (figure 3h), the portion 8 is partially sheared to create a second portion of an opening 20 further comprising a first portion made at the portion 18 during the second shearing operation.

The opening 20 is also made subsequent to the deep drawing operation to ensure proper conformation and relatively small dimensional tolerances of the opening 20.

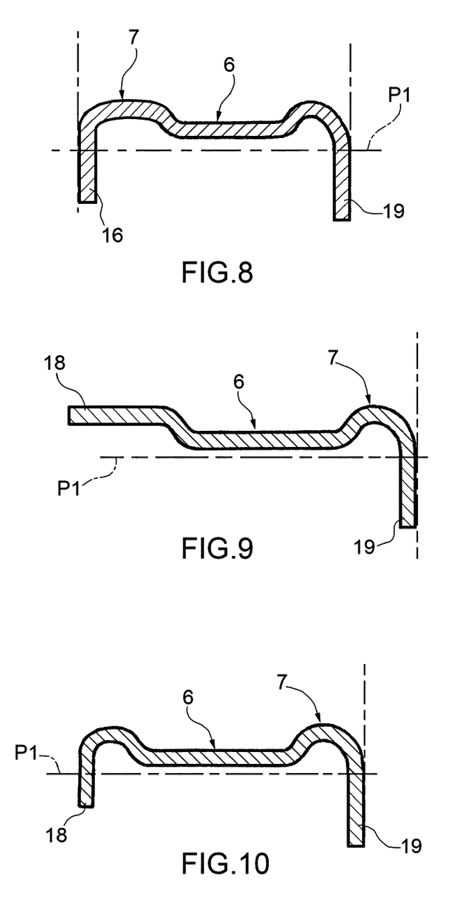

With reference to figures 2 and 3h, in an eighth operating step:
the hole 4 and one of the holes 12 are provided with respective annular collars 21, 22 protruding from the face 3b; and
the portion 18 of the edge 7 is bent according to a substantially 90° angle with respect to a reference plane P1 (figure 10) parallel to the surfaces 3a, 3b.

With regard to the above point it should be clarified that the collar 21 permits the coupling of the arm 1 to a first bush (not shown).

With regard to the above point it should be clarified that the portions 16 and 18, once bent, define, at the opening 20, a seat 23 (figures 1 and 2), which has the shape of an arc of a circle and is suitable to couple, in use, to a second bush (not shown).

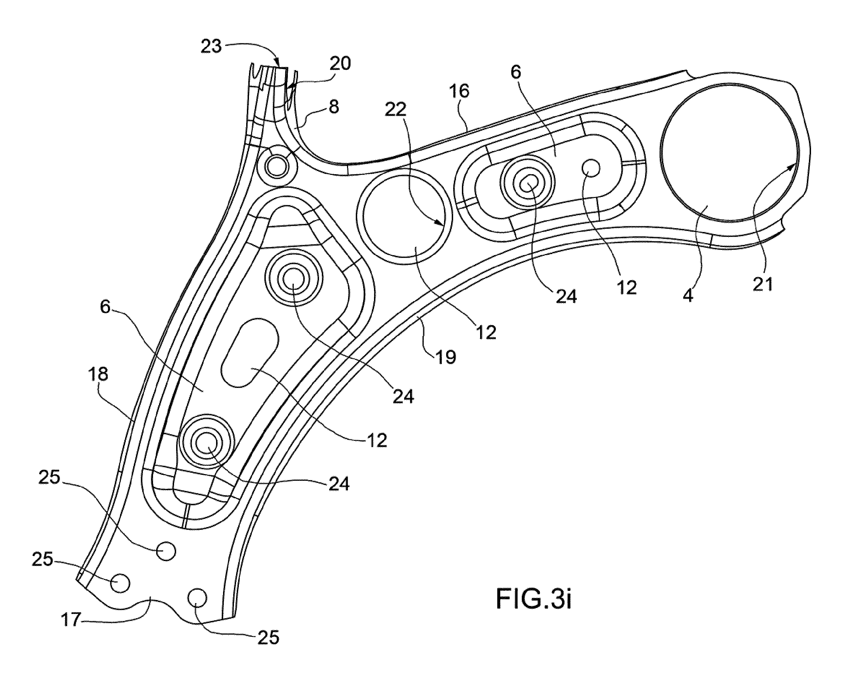

In a ninth operating step (figure 3i), the blank 3 is placed and sized at the hole 4, part of the portion 6, the portion 17, and the seat 23.

In a tenth operating step (figure 3i):
the collar 2 is sized so as to present the dimensional tolerances required to couple to the aforesaid first bush (not shown);
the portion 6 is drilled to make a plurality of functional holes 24 (in this case three holes 24); and
the portion 17 is drilled to create a plurality of coupling holes 25 (in this case three holes 25) suitable to allow the screwing of an articulated head(not shown).

Lastly, in an eleventh operating step, the seat 23 is made by chip removal to present the shape and tolerances required to couple to the aforesaid second sleeve (not shown).

The method described above, thus makes it possible to make a monocoque arm 1 which does not require, at the end of the stamping process, additional welding operations, and which presents a relatively simple and inexpensive conformation free of parts bent below and parallel to the central portion 6.

## Claims

1. A method for stamping an arm for vehicle suspensions starting from substantially flat sheet metal (2), the method being **characterised in that** it comprises the steps of:
cutting a shaped blank (3) from the sheet metal (2), the blank (3) being delimited, in an initial configuration thereof, by two larger flat faces (3a, 3b), parallel and opposite to one another;
deep drawing a central portion (6) of the blank (3);
at least partially deep drawing a peripheral edge (7) of the blank (3) extending around the central portion (6);
at the end of the deep drawing steps, cutting, from the blank (3), an annular rim (9, 10, 11, 13, 14, 15) of the peripheral edge (7); and
at the end of the cutting step of the annular rim (9, 10, 11, 13, 14, 15), bending three portions (16, 18, 19) of the peripheral edge (7) according to an angle substantially measuring 90° relative to a reference plane (P1) substantially parallel to said faces (3a, 3b).

2. A method according to claim 1 and comprising, furthermore, the step of:
drilling the central portion (6) so as to make a first positioning hole (4) and the peripheral edge (7) to make a second positioning hole (5); and
centring the blank (3) on said first and second positioning holes (4, 5) so as to deep draw the central portion (6) and the peripheral edge (7).

3. A method according to claim 2, wherein the first positioning hole (4) is made during the cutting of said annular rim (9, 10, 11, 13, 14, 15).

4. A method according to claim 2 or 3 and comprising, furthermore, the step of:
widening the first positioning hole (4) to make a coupling hole (4) with a bush.

5. A method according to claim 4 and comprising, furthermore, the steps of:
providing the coupling hole with a collar (21); and
sizing the collar (21).

6. A method according to claim 4 or 5 and comprising, furthermore, the step of:
sizing the coupling hole (4) and/or at least part of the central portion and/or at least part of the peripheral edge (7).

7. A method according to any of the previous claims and comprising, furthermore, the step of:
drilling said central portion (6) so as to obtain a plurality of functional holes (12, 24).

8. A method according to claim 7, wherein at least some of the functional holes (12,24) are made during the cutting of said annular rim (9, 10, 11, 13, 14, 15).

9. A method according to claim 7 or 8 and comprising, furthermore, the step of:
providing at least some of the functional holes (12, 24) with collars.

10. A method according to any of the previous claims, wherein the annular rim (9, 10, 11, 13, 14, 15) is cut from the blank (3) in two subsequent cutting operations.

11. A method according to any of the previous claims, wherein the annular rim (9, 10, 11, 13, 14, 15) is cut from the blank (3) at the end of the deep drawing operations.

12. A method according to any of the previous claims and comprising, furthermore, the step of:
cutting part of the deep-drawn peripheral edge (7) so as to obtain an opening (20).

13. A method according to claim 12, wherein a first portion of the opening (20) is made when the annular rim (9, 10, 11, 13, 14, 15) is cut from the blank (3) and a second portion of the opening (20) is made subsequent to making the first portion.

14. A method according to any of the previous claims and comprising, furthermore, the step of:
drilling an end portion (17) of the peripheral edge (7) so as to obtain a plurality of coupling holes (25) to be coupled to an articulated head.

15. A method according to any of the previous claims, wherein the three portions (16, 18, 19) of the peripheral edge (7) are bent in two distinct bending operations.

16. A method according to claim 15 and comprising, furthermore, the step of:
cutting part of the deep-drawn peripheral edge (7) so as to obtain an opening (20);
a portion (18) of the peripheral edge (7) being bent subsequent to both the bending of the other two portions (16, 19) of the peripheral edge (7) and the making of the opening (20).

17. Monocoque vehicle suspension arm made with the method claimed in any of the preceding claims.
